# EUROPÄISCHE PATENTANMELDUNG

(11) **EP 1 762 972 A2**
(43) Veröffentlichungstag der Anmeldung: **14.03.2007**
(21) Anmeldenummer: 06119605.1
(22) Anmeldetag: 28.08.2006
(51) Int. Cl.: G06Q 10/00

(54) **Vorrichtung mit einer Recheneinheit zum automatischen Erstellen und/oder Konzipieren eines Gesamtprodukts**

(30) Priorität: 08.09.2005 DE 102005042803
(71) Anmelder: BSH Bosch und Siemens Hausgeräte GmbH, 81739 München (DE)
(72) Erfinder: Balk, Katja, 83355 Grabenstätt (DE)

(57) **Zusammenfassung**

Die Erfindung geht aus von einer Vorrichtung mit einer Recheneinheit (10) zum automatischen Erstellen und/oder Konzipieren eines Gesamtprodukts (12) aus einem Ensemble (14) von Einzelelementen (16) unter Berücksichtigung von zumindest einem Kundenwunschparameter (Z, E, Kᵢ).

Um eine Vorrichtung und ein Verfahren bereitzustellen, durch welche trotz eines beschränkten Ensembles (14) von Einzelelementen (16) jedem erdenklichen, durch entsprechende Kundenwunschparameter (Z, E, Kᵢ) klassifizierten Kundenwunsch in der bestmöglichen Weise entsprochen werden kann, wird vorgeschlagen, dass die Recheneinheit (10) dazu vorgesehen ist, den Einzelelementen (16) aus dem Ensemble (14) abhängig von dem Kundenwunschparameter (Z, E, Kᵢ) wenigstens eine Präferenzkenngröße (PK) zuzuordnen und die Einzelelemente (16) in einer durch die Präferenzkenngröße (PK) vorgegebenen Reihenfolge aus dem Ensemble (14) auszuwählen und in das Gesamtprodukt (12) zu integrieren.

## Beschreibung

Die Erfindung geht aus von einer Vorrichtung mit einer Recheneinheit zum automatischen Erstellen und/oder Konzipieren eines Gesamtprodukts nach dem Oberbegriff des Anspruchs 1 sowie von einem Verfahren zum Herstellen eines Haushaltsgeräts nach dem Oberbegriff des Anspruchs 7.

Es sind Vorrichtungen bekannt, die eine Recheneinheit und eine Eingabeeinheit umfassen und die durch eine geeignete Software der Recheneinheit dazu geeignet sind, aus einem Ensemble von Einzelelementen unter Berücksichtigung von zumindest einem Kundenwunschparameter ein Gesamtprodukt zusammenzustellen. Beispielsweise sind Internet-Rezeptdatenbanken bekannt, die abhängig von Kundenwunschparametern, welche die geschmacklichen Vorlieben des Kunden wiedergeben, ein individualisiertes Kochbuch generieren. Das individualisierte Kochbuch wird von einer von der Recheneinheit gesteuerten Maschine mittels eines Schriftsatzprogramms gesetzt und dem Kunden elektronisch oder in einer Papierversion zur Verfügung gestellt.

Die Aufgabe der Erfindung besteht insbesondere darin, eine Vorrichtung und ein Verfahren bereitzustellen, durch welche trotz eines beschränkten Ensembles von Einzelelementen jedem erdenklichen, durch entsprechende Kundenwunschparameter klassifizierten Kundenwunsch in der bestmöglichen Weise entsprochen werden kann.

Die Aufgabe wird erfindungsgemäß durch die Merkmale der Patentansprüche 1 und 8 gelöst, während vorteilhafte Ausgestaltungen und Weiterbildungen der Erfindung den Unteransprüchen entnommen werden können.

Die Erfindung geht aus von einer Vorrichtung mit einer Recheneinheit zum automatischen Erstellen und/oder Konzipieren eines Gesamtprodukts aus einem Ensemble von Einzelelementen unter Berücksichtigung von zumindest einem Kundenwunschparameter.

Es wird vorgeschlagen, dass die Recheneinheit dazu vorgesehen ist, den Einzelelementen aus dem Ensemble abhängig von dem Kundenwunschparameter wenigstens eine Präferenzkenngröße zuzuordnen und die Einzelelemente in einer durch die Präferenzkenngröße vorgegebenen Reihenfolge aus dem Ensemble auszuwählen und in das Gesamtprodukt zu integrieren. Durch die Zuordnung der Präferenzkenngröße zu den Einzelelementen kann eine Reihenfolge der Auswahl und Integration vorgegeben werden, und es kann sichergestellt werden, dass auch für den Fall, dass nicht alle Kundenwünsche vollständig erfüllt werden können, ein befriedigendes Gesamtprodukt erstellt und/oder konzipiert werden kann. Ein Absolutwert des Kundenwunschparameters ist durch die Anordnung bzw. Auswahl in der durch die Präferenzkenngröße vorgegebenen Reihenfolge irrelevant, da der Wert der Präferenzkenngröße nur im Vergleich zu den Werten der Präferenzkenngrößen anderer Einzelelemente betrachtet wird. Es kann erreicht werden, dass bei einem vorgegebenen, beschränkten Ensemble stets das unter der Randbedingung des beschränkten Ensembles von Einzelelementen optimale Gesamtprodukt erstellt und/oder konzipiert wird. Es kann insbesondere vermieden werden, dass die erfindungsgemäße Vorrichtung bei bestimmten Kundenwunschparametern überhaupt kein Ergebnis liefert.

Unter "vorgesehen" soll in diesem Zusammenhang auch "ausgelegt" und "ausgestattet" verstanden werden. Die Vorrichtung kann prinzipiell zum automatischen Erstellen und/oder Konzipieren jedes erdenklichen Gesamtprodukts genutzt werden, das nach individuellen Kundenwünschen aus einem großen Ensemble von Einzelelementen zusammengesetzt ist. Beispielsweise kann das Gesamtprodukt ein Kochbuch sein, und zwar sowohl in Papierform als auch in der Form einer Datenbank, die in einem Haushaltsbackofen bzw. in einem Herd gespeichert und über ein Display abrufbar sein kann. In diesem Fall können die Einzelelemente die Rezepte sein, die auf den individuellen Geschmack und/oder die individuelle Kücheneinrichtung des Kunden abgestimmt sein können. Die Vorrichtung kann einen Rezeptspeicher des Haushaltsbackofens durch das Aufspielen der Datenbank werkseitig und vor der Auslieferung an den Kunden konfigurieren. Ferner wäre es denkbar, dass die Vorrichtung ein Kraftfahrzeug konzipiert. Die zu berücksichtigenden Kundenwunschparameter betreffen dann Einzelelemente, wie beispielsweise Ausstattungsmerkmale und Zubehörteile. Ferner wäre es denkbar, dass die Vorrichtung einzelne Hausgeräte und/oder ganze Küchen erstellt und/oder konzipiert, wobei auch in diesem Fall die Einzelelemente durch Ausstattungsmerkmale gegeben wären.

In einer Weiterbildung der Erfindung wird vorgeschlagen, dass die Recheneinheit dazu vorgesehen ist, das Auswählen und Integrieren der Einzelelemente beim Erreichen einer Sollzahl von Einzelelementen abzubrechen. Dadurch kann erreicht werden, dass die Sollzahl unabhängig von den Absolutwerten der Kundenwunschparameter stets erreicht wird.

Ist die Recheneinheit dazu vorgesehen, abhängig von dem Kundenwunschparameter eine Sollzahl von Elementen aus einer Kategorie von Einzelelementen des Gesamtprodukts zu bestimmen, kann eine Gewichtung der Kategorien stets flexibel und nach Maßgabe der Kundenwunschparameter angeboten werden. Für den Fall, dass das Gesamtprodukt von einem Kochbuch bzw. von einer Rezeptdatenbank gebildet ist, könnten die Kategorien beispielsweise verschiedene Gänge eines Menüs voneinander abgrenzen. Einem Kunden, der gerne Nachtisch kocht, könnte zum Beispiel eine besonders große Zahl von Nachtischrezepten zur Verfügung gestellt werden.

Umfasst die Vorrichtung eine Datenbank zum Speichern von Eigenschaften der Einzelelemente, wobei jedem Einzelelement wenigstens zwei Kenngrößen für unterschiedliche Eigenschaften zugeordnet sind, kann erreicht werden, dass jedes Einzelelement bei einer großen Bandbreite von Kundenwunschparametern zum Einsatz kommt. Das Einzelelement kann beispielsweise sowohl dann zum Einsatz kommen, wenn der Kunde eine erste, durch eine erste Kenngröße beschriebene Eigenschaft wünscht, als auch dann, wenn der Kunde eine zweite, durch eine zweite Kenngröße beschriebene Eigenschaft wünscht.

Ist die Recheneinheit dazu vorgesehen, zum Bestimmen der Präferenzkenngröße jeweils ein Kundenwunschparameter mit einer der Eigenschaften der Einzelelemente zu vergleichen, kann gewährleistet werden, dass die Präferenzkenngröße ein zuverlässiges Gesamtbild einer mehrere Eigenschaften betreffenden Interessenlage des Kunden in Bezug auf das betrachtete Einzelelement vermittelt.

Ist die Recheneinheit dazu vorgesehen, wenigstens ein Einzelelement abhängig von dem Kundenwunschparameter zu modifizieren, können die Wünsche des Kunden nicht nur durch die Auswahl der Einzelelemente, sondern auch durch deren Modifikation in einer noch weiter gehenden Weise befriedigt werden.

Ist die Recheneinheit dazu vorgesehen, abhängig von dem Kundenwunschparameter ein als individualisierte Rezeptdatenbank eines Hausgeräts ausgebildetes Gesamtprodukt zu konfigurieren, kann durch ein schnelles, interessengerechtes und individualisiertes Rezeptangebot ein Bedienkomfort des Hausgeräts und damit eine Kundenzufriedenheit nachhaltig verbessert werden.

Ferner geht die Erfindung aus von einem Verfahren zum Herstellen eines Hausgeräts aus einem Ensemble von Einzelelementen unter Berücksichtigung von zumindest einem Kundenwunschparameter.

Es wird vorgeschlagen, dass den Einzelelementen aus dem Ensemble abhängig von dem Kundenwunschparameter wenigstens eine Präferenzkenngröße zugeordnet wird und dass dann die Einzelelemente in einer durch die Präferenzkenngröße vorgegebenen Reihenfolge aus dem Ensemble ausgewählt und in das Hausgerät integriert werden. Dadurch kann trotz eines beschränkten Ensembles von Einzelelementen den Kundenwünschen in einer optimalen Weise Rechnung getragen werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Vorrichtung mit einer Recheneinheit zum automatischen Konzipieren und Erstellen eines Kochbuchs,
- Fig. 2: einen von der Recheneinheit generierten Fragebogen zum Erfassen von Kundenwunschparametern,
- Fig. 3: eine schematische Darstellung einer Datenbank zum Speichern von Einzelelementen,
- Fig. 4: eine schematische Darstellung zum Speichern von Eigenschaften der Einzelelemente aus Figur 3,
- Fig. 5: eine schematische Darstellung zur Einteilung des Kochbuchs in Kategorien mit einer individualisierten Größe,
- Fig. 6: eine schematische Darstellung zur Integration von Einzelelementen aus einem Ensemble in das Kochbuch und
- Fig. 7: eine Vorrichtung mit einer Recheneinheit zum automatischen Konzipieren und Konfigurieren eines Haushaltsbackofens aus einem Ensemble von Einzelelementen.

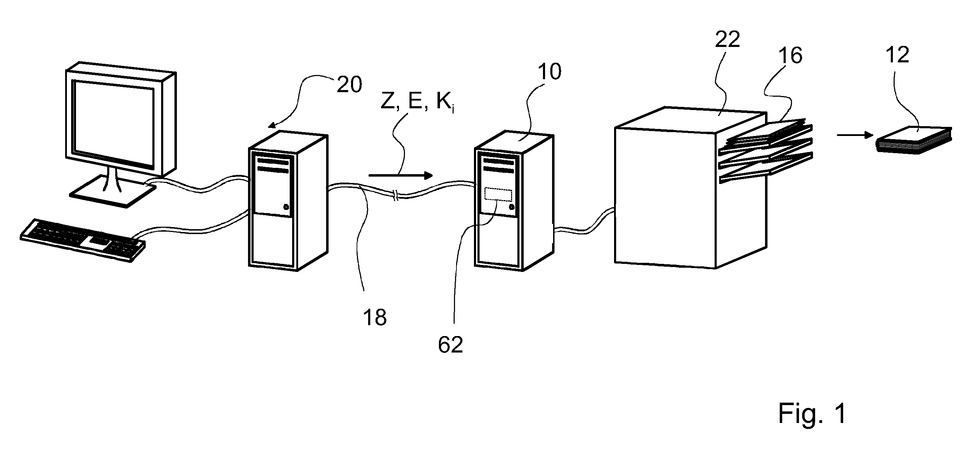

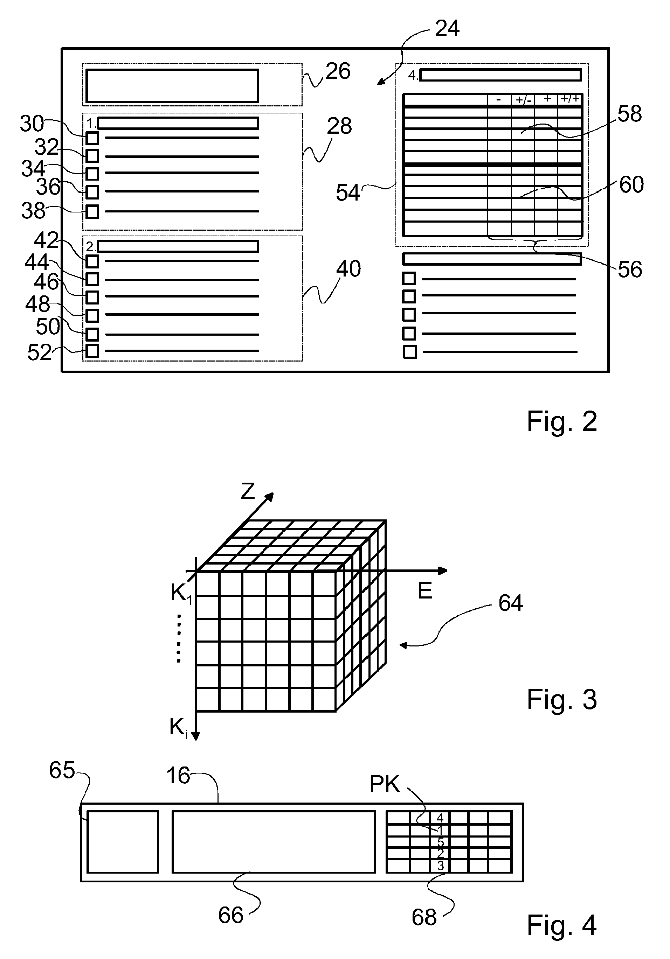

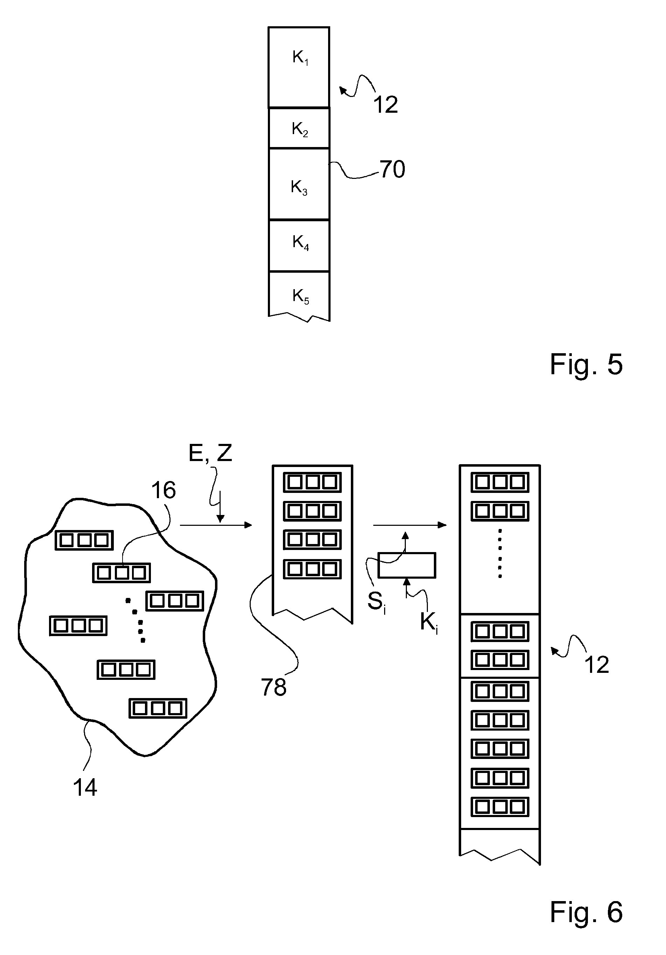

Figur 1 zeigt eine Vorrichtung mit einer Recheneinheit 10 zum automatischen Erstellen eines Gesamtprodukts 12 aus einem Ensemble 14 von Einzelelementen 16, und zwar zum automatischen Erstellen eines Kochbuchs aus einem Ensemble 14 (Figur 6) von Rezepten, die in einer Datenbank (Figur 3) der Recheneinheit 10 gespeichert sind. Ein Kunde kann über das Internet 18 von einem Homecomputer 20 aus mit der Recheneinheit 10 kommunizieren und Kundenwunschparameter Z, E, Kᵢ eingeben, die eine individualisierte Ausgestaltung des Gesamtprodukts 12 betreffen.

Die Recheneinheit 10 verarbeitet die Kundenwunschparameter Z, E, Kᵢ, wählt die Einzelelemente 16 aus dem Ensemble 14 aus und integriert sie abhängig von den eingegebenen Kundenwunschparametern Z, E, Kᵢ nach einem weiter unten beschriebenen Verfahren in das Gesamtprodukt 12. Zunächst konzipiert die Recheneinheit 10 das Gesamtprodukt 12 durch die softwareseitige Auswahl der Einzelelemente 16 und steuert anschließend einen Drucker 22 an, der die einzelnen Blätter des Gesamtprodukts 12 bzw. des Kochbuchs ausdruckt. In einem hier nicht dargestellten Buchbindeverfahren werden die einzelnen Blätter zu dem fertigen Gesamtprodukt 12 verbunden.

In alternativen Ausgestaltungen der Erfindung entfällt das Ausdrucken und Binden des Gesamtprodukts 12 und die Recheneinheit 10 stellt dem Kunden das durch ein Schriftsatzprogramm generierte Gesamtprodukt 12 zum Download bereit bzw. sendet dem Kunden das Gesamtprodukt 12 selbsttätig per E-Mail zu.

Figur 2 zeigt schematisch einen von der Recheneinheit 10 generierten Fragebogen 24, der auf dem Homecomputer 20 darstellbar ist und von dem Kunden per Mouseclick ausgefüllt werden kann.

In einem ersten Block 26 sind einleitende Worte in der von dem Kunden ausgewählten Sprache dargestellt. Der Block 26 enthält unter anderem Informationen über den Zweck des Fragebogens 24 und Instruktionen zum Ausfüllen desselben.

In einem zweiten Block 28 kann der Kunde durch das Anklicken von Checkboxen 30 - 38 Informationen über eine bevorzugte Ernährungsform eingeben. Durch das Anklicken einer ersten Checkbox 30 erklärt der Kunde, dass vegetarische Kost besonders berücksichtigt werden soll, durch das Anklicken einer zweiten Checkbox 32 erklärt der Kunde, dass Diabetikerkost besonders berücksichtigt werden soll, durch das Anklicken einer dritten Checkbox 34 erklärt der Kunde, dass leichte, kalorienarme Kost besonders berücksichtigt werden soll, durch Anklicken einer vierten Checkbox 36 erklärt der Kunde, dass schnelle Küche besonders berücksichtigt werden soll, und durch das Anklicken einer fünften Checkbox 38 erklärt der Kunde, dass er bezüglich der Ernährungsform keine besonderen Wünsche hat. Die fünfte Checkbox 38 ist beim Aufrufen des Fragebogens 24 als Vorauswahl markiert.

In einem dritten Block 40 kann der Kunde durch das Anklicken von Checkboxen 42 - 52 Informationen über eine bevorzugte Zubereitungsart eingeben. Durch das Anklicken einer ersten Checkbox 42 erklärt der Kunde, dass mitteleuropäische Kost besonders berücksichtigt werden soll, durch das Anklicken einer zweiten Checkbox 44 erklärt der Kunde, dass mediterrane Kost besonders berücksichtigt werden soll, durch das Anklicken einer dritten Checkbox 46 erklärt der Kunde, dass asiatische Kost besonders berücksichtigt werden soll, durch das Anklicken einer vierten Checkbox 48 erklärt der Kunde, dass orientalische Kost besonders berücksichtigt werden soll, durch das Anklicken einer fünften Checkbox 50 erklärt der Kunde, dass texanische und mexikanische Kost, auch als "Texmex" bezeichnet, besonders berücksichtigt werden soll, und durch das Anklicken einer sechsten Checkbox 52 erklärt der Kunde, dass er bezüglich der Zubereitungsart keine besonderen Wünsche hat. Die sechste Checkbox 52 im dritten Block 40 ist beim Aufrufen des Fragebogens 24 als Vorauswahl markiert.

In einem vierten Block 54 kann der Kunde eingeben, an welchen Kategorien von Rezepten er besonders interessiert ist und den in einer Liste aufgeführten Kategorien durch das Setzen einer Markierung auf einer Bewertungsskala 56 jeweils eine von vier Bewertungen von null bis drei geben. Die aufgezählten Kategorien umfassen zwei Gruppen 58, 60. Eine erste, mit "Backen und Gratinieren" überschriebene Gruppe 58 umfasst die Kategorien "Kuchen", "Torten", "Kleingebäck, Plätzchen", "Brot, Brötchen", "Pizza, Quiche, Pastete", "Aufläufe, Gratins, Soufflés" und "Snacks, Überbackenes". Eine zweite, mit "Braten und Grillen" überschriebene Gruppe 60 umfasst die Kategorien "Rind", "Schwein", "Kalb", "Lamm", "Geflügel", "Wild" und "Fisch und Meeresfrüchte".

Nach dem Anklicken der gewünschten Checkboxen 30 - 38; 42 - 52 und dem Setzen der Markierungen auf den Bewertungsskalen 56 kann der Kunde durch das Auslösen eines Sendesignals die in dem Fragebogen 24 erfassten Daten an die Recheneinheit 10 übermitteln. Die Recheneinheit 10 interpretiert die Daten als Kundenwunschparameter Z, E, Kᵢ zum Konzipieren und Erstellen des Gesamtprodukts 12.

Der Kundenwunschparameter Z entspricht der vom Kunden bevorzugten Zubereitungsart und ist umkehrbar eindeutig der unter den Checkboxen 42 - 52 getroffenen Auswahl im dritten Block 40 zugeordnet. Der Kundenwunschparameter E entspricht der vom Kunden bevorzugten Ernährungsart und ist umkehrbar eindeutig der Auswahl der Checkboxen 30 - 38 im zweiten Block 28 zugeordnet. Der Vektor von Kundenwunschparametern Kᵢ repräsentiert die im Block 54 getroffene Auswahl des Kunden.

Figur 3 zeigt schematisch die in einer Speichereinheit 62 der Recheneinheit 10 gespeicherte Datenbank 64 zum Speichern von Eigenschaften der Einzelelemente 16 bzw. Rezepte. Die Datenbank 64 ist als dreidimensionales Datenfeld ausgebildet, in deren durch einen dreidimensionalen Ortsvektor charakterisierten Speicherplätzen Pointervariablen abgelegt sind, die auf Einzelelemente 16 aus dem in der Speichereinheit 62 gespeicherten Ensemble 14 von Einzelelementen 16 gerichtet sind. Dabei bezeichnet eine erste Richtung des Datenfelds die im zweiten Block 28 des Fragebogens 24 angegebene bevorzugte Ernährungsform bzw. den Kundenwunschparameter E, eine zweite Richtung im Datenfeld eine bevorzugte Zubereitungsart bzw. den Kundenwunschparameter Z, und eine dritte Richtung im Datenfeld betrifft die im vierten Block 54 des Fragebogens 24 angegebenen bevorzugten Kategorien von Rezepten bzw. die Kundenwunschparameter Kᵢ. Der Index "i" der Kundenwunschparameter Kᵢ durchläuft alle Kategorien des vierten Blocks 54.

Die Eigenschaften der Einzelelemente 16 sind durch den Speicherort der auf das entsprechende Einzelelement 16 verweisenden Pointervariablen charakterisiert. Dabei verweisen im Allgemeinen mehrere, an verschiedenen Orten gespeicherte Pointervariablen auf das gleiche Einzelelement 16. Zu jedem dieser Verweise ist im betreffenden Einzelelement eine Präferenzkenngröße PK mit einem Wert zwischen 1 und 5 gespeichert. Je niedriger der Wert, desto besser passt das durch die Pointervariable bezeichnete Einzelelement 16 zu der durch den dreidimensionalen Ortsvektor charakterisierten Kategorie.

Figur 4 zeigt schematisch ein Einzelelement 16 aus dem Ensemble 14. Das Einzelelement 16 besteht aus drei Datenblöcken 65, 66, 68. In einem ersten Datenblock 65 werden Gargeräteeinstellungen zu dem Rezept gespeichert, das dem Einzelelement 16 entspricht. Der Kunde kann in einem weiteren, hier nicht dargestellten Fragebogen Spezifikationen seines Haushaltsbackofens eingeben, die weitere Kundenwunschparameter Z, E, Kᵢ bilden. Die Recheneinheit 10 bestimmt die Gargeräteeinstellungen abhängig von diesen weiteren Kundenwunschparametern Z, E, Kᵢ, so dass die Recheneinheit 10 das Einzelelement 16 abhängig von den weiteren Kundenwunschparametern Z, E, Kᵢ modifiziert bzw. anpasst.

In einem zweiten Datenblock 66 sind Handlungsanweisungen zu dem Rezept bzw. dem Einzelelement 16 gespeichert, und zwar in einer über den weiteren Fragebogen vom Kunden ausgewählten Sprache. In einem dritten Datenblock 68 sind schließlich Präferenzkenngrößen PK für eine Art des durch das Einzelelement 16 dargestellten Rezepts gespeichert. Der Wert der Präferenzkenngrößen PK ist umso kleiner, je besser das Einzelelement 16 durch die dem dreidimensionalen Speicherort zugeordnete Kategorie charakterisiert ist. Das Rezept des exemplarisch dargestellten Einzelelements 16 ist ein Rezept aus der asiatischen Küche, so dass entsprechende Präferenzkenngrößen PK nur in einer der asiatischen Küche zugeordneten Spalte zu finden sind. Es passt sehr gut in die Kategorie "asiatisch, vegetarisch" und hat daher in dieser Kategorie die Präferenzkenngröße PK mit dem Wert 1. Andererseits ist es auch "asiatisch" und "leicht" und hat in dieser Kategorie die Präferenzkenngröße PK mit dem Wert 2. Auch ist es einigermaßen schnell zuzubereiten und hat daher in der entsprechenden Kategorie die Präferenzkenngröße PK mit dem Wert 3. Ferner ist es auch mit der Präferenzkenngröße PK mit dem Wert 4 für die "normale" asiatische Küche und mit der Kennziffer mit dem Wert 5 gerade noch für Diabetiker geeignet.

Figur 5 zeigt schematisch eine Aufteilung des Gesamtprodukts 12 in mehrere Kategorien von Einzelelementen 16 abhängig von den im vierten Block 54 des Fragebogens 24 eingegebenen Kundenwunschparametern Kᵢ bzw. Bewertungen. Die Recheneinheit 10 bildet eine Summe der im vierten Block 54 abgegebenen Kundenwunschparameter Kᵢ und teilt eine Sollzahl der Einzelelemente 16 des Gesamtprodukts 12, die im vorliegenden Fall 114 beträgt, durch die Summe. Anschließend multipliziert sie das Ergebnis jeweils mit der Bewertung des Kunden zu einer der Kategorien bzw. mit dem entsprechenden Kundenwunschparameter Kᵢ und rundet die Ergebnisse auf ganze Zahlen. Die auf diese Weise erhaltene Zahl für eine Kategorie von Einzelelementen 16 verwendet die Recheneinheit 10 als Sollzahl Sᵢ von Elementen aus der entsprechenden Kategorie in dem Gesamtprodukt 12. Im vorliegenden Beispiel ergeben sich die folgenden Werte:

| Kategorie | Kᵢ | Sᵢ |
|---|---|---|
| Kuchen | 2 | 11 |
| Torten | 3 | 17 |
| Kleingebäck, Plätzchen | 0 | 0 |
| Brot, Brötchen | 3 | 17 |
| Pizza, Quiche, Pastete | 2 | 11 |
| Aufläufe, Gratins, Soufflés | 2 | 11 |
| Snacks, Überbackenes | 0 | 0 |
| Rind | 0 | 0 |
| Schwein | 0 | 0 |
| Kalb | 1 | 6 |
| Lamm | 2 | 11 |
| Geflügel | 2 | 11 |
| Wild | 0 | 0 |
| Fisch und Meeresfrüchte | 0 | 0 |
| Gemüse | 3 | 17 |

Die Recheneinheit 10 bestimmt daher die Sollzahl Sᵢ der Elemente aus einer Kategorie mit dem Laufindex "i" abhängig von den Kundenwunschparametern Kᵢ.

Anschließend legt die Recheneinheit 10 eine den Sollzahlen Sᵢ entsprechende Datenstruktur 70 des Gesamtprodukts 12 an (Figur 5) und integriert die Einzelelemente 16 in die entsprechenden Kategorien bis zum Erreichen der jeweiligen Sollzahl Sᵢ.

Das Auffüllen der Kategorien soll anhand der letzten, in der obigen Tabelle aufgeführten Kategorie "Gemüse" erläutert werden. Angenommen, der Kunde hat im zweiten Block 28 des Fragebogens 24 als bevorzugte Ernährungsform "leicht" und als bevorzugte Zubereitungsart "asiatisch" angegeben. Dann sucht die Recheneinheit 10 in dem durch die Eigenschaften "Gemüse", "asiatisch" und "leicht" definierten Feld der dreidimensionalen Datenbank 64 nach Pointervariablen und lädt die Einzelelemente 16, auf welche die Pointervariablen verweisen, aus der Speichereinheit 62, sofern die entsprechenden Einzelelemente 16 nicht bereits in einer anderen Kategorie in das Gesamtprodukt 12 integriert wurden. Anschließend ordnet die Speichereinheit 62 die Einzelelemente 16 nach der unter der Kategorie "leicht" und "asiatisch" eingetragenen Präferenzkenngröße PK in einer Liste 78, und zwar aufsteigend nach den Werten der Präferenzkenngröße PK (Figur 6).

Da im dritten Datenblock jedes Einzelelements 16 verschiedene mögliche Werte der Präferenzkenngröße PK bezüglich verschiedener Kategorien gespeichert sind, bestimmt die Recheneinheit 10 den treffenden Wert der Präferenzkenngröße PK in diesem Schritt abhängig von den im zweiten und dritten Block 40 des Fragebogens 24 eingegebenen Kundenwunschparametern Z, E.

Aus der Liste 78 überführt die Recheneinheit 10 die Einzelelemente 16 der Reihe nach in das Gesamtprodukt 12, bis die Sollzahl Sᵢ der Einzelelemente 16 der entsprechenden Kategorie erreicht ist. Damit ist die Konzeption des Gesamtprodukts 12 beendet und ein Herstellungsprozess, im vorliegenden Fall ein Schriftsatzprozess und ein Druckvorgang, wird von der Recheneinheit 10 gestartet.

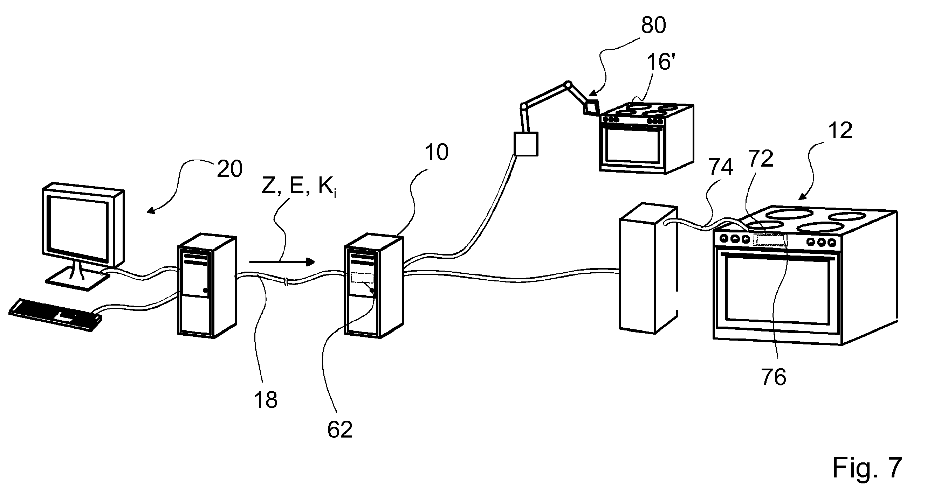

Figur 7 zeigt schematisch eine weitere Ausgestaltung der Erfindung mit einer Recheneinheit 10 zum Erstellen und Konzipieren eines als Haushaltsbackofen ausgebildeten Gesamtprodukts 12. In der Beschreibung zu Figur 7 wird im Wesentlichen auf Unterschiede zu dem in den Figuren 1 - 6 dargestellten Ausführungsbeispiel eingegangen. In Hinblick auf gleich bleibende Merkmale wird auf die Beschreibung zu den Figuren 1 - 6 verwiesen. Analoge Merkmale sind mit gleichen Bezugszeichen versehen.

Der Haushaltsbackofen bzw. das Gesamtprodukt 12 umfasst eine in einem Speicher 72 gespeicherte individualisierte Rezeptdatenbank 76, welche von der Recheneinheit 10 in völliger Analogie zu dem in den Figuren 1 - 6 dargestellten Ausführungsbeispiel konzipiert wird und über ein Datenkabel 74 in den Speicher 72 übertragen wird. Ferner wählt die Recheneinheit 10 abhängig von den erfassten Kundenwunschparametern Z, E, Kᵢ weitere, als Baumodule ausgebildete Einzelelemente 16' aus einem Ensemble 14 von Einzelelementen 16 und integriert diese Einzelelemente 16' abhängig von Kundenwunschparametern und Präferenzkenngrößen nach dem oben beschriebenen Algorithmus in das Gesamtprodukt 12. Dazu steuert die Recheneinheit 10 eine Produktionsstraße 80. Hat der Kunde beispielsweise "asiatisch" als bevorzugte Zubereitungsart ausgewählt, so integriert die Recheneinheit 10 mit hoher Priorität eine Wok-Gasflamme in das Gesamtprodukt 12. Hat der Kunde beispielsweise "leicht" als bevorzugte Ernährungsart ausgewählt, integriert die Recheneinheit 10 mit hoher Priorität einen Dampfgarer in das Gesamtprodukt 12.

### Bezugszeichen

- 10: Recheneinheit
- 12: Gesamtprodukt
- 14: Ensemble
- 16: Einzelelement
- 18: Internet
- 20: Homecomputer
- 22: Drucker
- 24: Fragebogen
- 26: Block
- 28: Block
- 30: Checkbox
- 32: Checkbox
- 34: Checkbox
- 36: Checkbox
- 38: Checkbox
- 40: Block
- 42: Checkbox
- 44: Checkbox
- 46: Checkbox
- 48: Checkbox
- 50: Checkbox
- 52: Checkbox
- 54: Block
- 56: Bewertungsskala
- 58: Gruppe
- 60: Gruppe
- 62: Speichereinheit
- 64: Datenbank
- 65: Datenblock
- 66: Datenblock
- 68: Datenblock
- 70: Datenstruktur
- 72: Speicher
- 74: Datenkabel
- 76: Rezeptdatenbank
- 78: Liste
- 80: Produktionsstraße
- PK: Präferenzkenngröße
- Z: Kundenwunschparameter
- E: Kundenwunschparameter
- Kᵢ: Kundenwunschparameter
- Sᵢ: Sollzahl

## Patentansprüche

1. Vorrichtung mit einer Recheneinheit (10) zum automatischen Erstellen und/oder Konzipieren eines Gesamtprodukts (12) aus einem Ensemble (14) von Einzelelementen (16) unter Berücksichtigung von zumindest einem Kundenwunschparameter (Z, E, Kᵢ), **dadurch gekennzeichnet, dass** die Recheneinheit (10) dazu vorgesehen ist, den Einzelelementen (16) aus dem Ensemble (14) abhängig von dem Kundenwunschparameter (Z, E, Kᵢ) wenigstens eine Präferenzkenngröße (PK) zuzuordnen und die Einzelelemente (16) in einer durch die Präferenzkenngröße (PK) vorgegebenen Reihenfolge aus dem Ensemble (14) auszuwählen und in das Gesamtprodukt (12) zu integrieren.

2. Vorrichtung nach Anspruch 1, **dadurch gekennzeichnet, dass** die Recheneinheit (10) dazu vorgesehen ist, das Auswählen und Integrieren der Einzelelemente (16) beim Erreichen einer Sollzahl (Sᵢ) von Einzelelementen (16) abzubrechen.

3. Vorrichtung nach einem der vorhergehenden Ansprüche, **dadurch gekennzeichnet, dass** die Recheneinheit (10) dazu vorgesehen ist, abhängig von dem Kundenwunschparameter (Kᵢ) eine Sollzahl (Sᵢ) von Elementen aus einer Kategorie von Einzelelementen (16) des Gesamtprodukts (12) zu bestimmen.

4. Vorrichtung nach einem der vorhergehenden Ansprüche, **gekennzeichnet durch** eine Datenbank (64) zum Speichern von Eigenschaften der Einzelelemente (16), wobei jedem Einzelelement (16) wenigstens zwei Werte der Präferenzkenngröße (PK) für unterschiedliche Eigenschaften zugeordnet sind.

5. Vorrichtung nach einem der vorhergehenden Ansprüche, **dadurch gekennzeichnet, dass** die Recheneinheit (10) dazu vorgesehen ist, wenigstens ein Einzelelement (16) abhängig von einem Kundenwunschparameter zu modifizieren.

6. Vorrichtung nach einem der vorhergehenden Ansprüche, **dadurch gekennzeichnet, dass** die Recheneinheit (10) dazu vorgesehen ist, abhängig von dem Kundenwunschparameter (E, Z, Kᵢ) ein als individualisierte Rezeptdatenbank (76) eines Hausgeräts ausgebildetes Gesamtprodukt zu konfigurieren.

7. Verfahren zum Herstellen eines Hausgeräts aus einem Ensemble (14) von Einzelelementen (16) unter Berücksichtigung von zumindest einem Kundenwunschparameter (Z, E, Kᵢ), **dadurch gekennzeichnet, dass** den Einzelelementen (16) aus dem Ensemble (14) abhängig von dem Kundenwunschparameter (Z, E, Kᵢ) wenigstens eine Präferenzkenngröße (PK) zugeordnet wird, dann die Einzelelemente (16) in einer durch die Präferenzkenngröße (PK) vorgegebenen Reihenfolge aus dem Ensemble (16) ausgewählt werden und in das Hausgerät integriert werden.
